# EUROPEAN PATENT SPECIFICATION

(11) **EP 2 902 168 B1**
(45) Date of publication and mention of the grant of the patent: **25.04.2018**
(21) Application number: 14198127.4
(22) Date of filing: 16.12.2014
(51) Int. Cl.: B29C 45/42, B29C 45/17

(54) **Take-out robot for injection molding machines**
Entnahmeroboter für Spritzgießmaschinen
Robot de retrait pour machines de moulage par injection

(30) Priority: 29.01.2014 JP 2014014751
(43) Date of publication of application: 05.08.2015
(73) Proprietor: SUMITOMO HEAVY INDUSTRIES, LTD., Tokyo 141-6025 (JP)
(72) Inventor: Sakamoto, Ichiro, Chiba-shi Chiba, 263-0001 (JP)
(74) Representative: Louis Pöhlau Lohrentz

(56) References cited:
- DE-A1- 19 616 928
- US-A- 3 789 093
- US-A- 4 803 787
- US-A- 5 588 225
- US-A- 5 948 341
- US-A1- 2008 256 789

## Description

### BACKGROUND OF THE INVENTION

### Field of the Invention

The present invention relates to a take-out system and a take-out robot for injection molding machines.

### Description of Related Art

An injection molding system includes an injection molding machine and a take-out robot. The injection molding machine forms molding products by filling cavity spaces in a mold unit with liquid molding materials and solidifying the filled molding materials (for instance, see Japanese Unexamined Patent Application Publication No. 2011-183705). The take-out robot takes the molding products out of the mold unit.

United States Patent US 5 948 341 discloses a take-out robot for injection molding machines in which air is supplied to induce an area of reduced pressure in a channel formed in a passage, wherein said area of reduced pressure draws a product into the passage and retains the product therein.

United States Patent US 4 803 787 discloses a device for preventing a condensation on cooled tools of a plastic molding machine. The device comprises a dehumidified gas source adapted to supply dehumidified gas to a gas passage.

Conventionally, condensation often occurs in a mold unit when molding is stopped and traces of the condensation adhere to molding products.

### SUMMARY OF THE INVENTION

The present invention has been made in view of the above problem, and an object thereof is to provide a take-out robot for injection molding machines, capable of suppressing condensation from occurring in a mold unit when molding is stopped.

In accordance with an aspect of the present invention for resolving the above problem, a take-out robot for injection molding machines, which takes a molding product obtained by filling a cavity space defined in a mold with a molding material out of the mold, includes a gas passage formation section configured to form a gas passage, wherein, when molding is stopped, the gas passage formation section allows dehumidified gas, having a dew point temperature which is less than a temperature of the mold, to be blown from the gas passage to the mold.

In accordance with an aspect of the present invention, there is provided a take-out robot for injection molding machines, capable of suppressing condensation from occurring in a mold unit when molding is stopped.

### BRIEF DESCRIPTION OF THE DRAWINGS

Fig. 1 is a view illustrating a state when mold closing is completed in an injection molding system according to an embodiment of the present invention.
Fig. 2 is a view illustrating a state when mold opening is completed in the injection molding system according to the embodiment of the present invention.
Fig. 3 is a view illustrating a state when molding is stopped in the injection molding system according to the embodiment of the present invention.

### DETAILED DESCRIPTION OF THE INVENTION

Hereinafter, an exemplary embodiment of the present invention will be described with reference to the drawings . Like or corresponding reference numerals refer to the same or corresponding components throughout the various figures, and description thereof will be omitted.

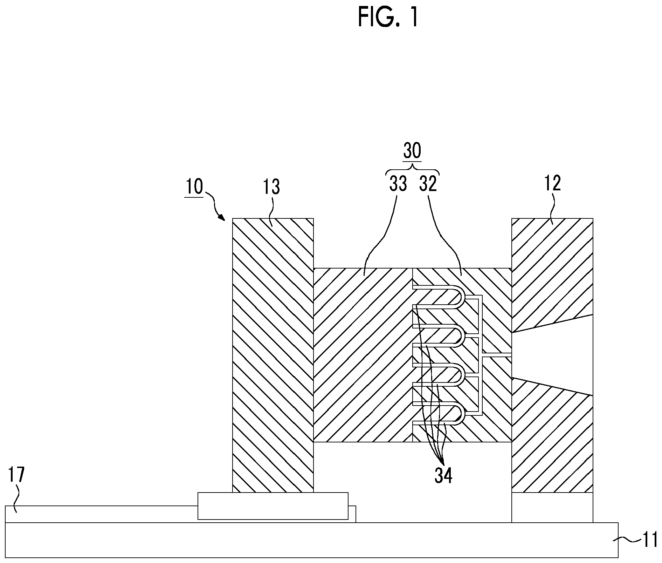

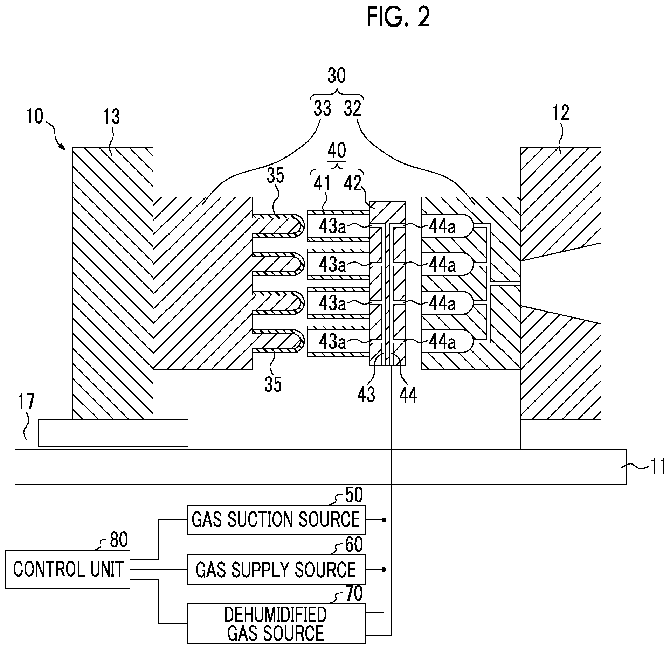

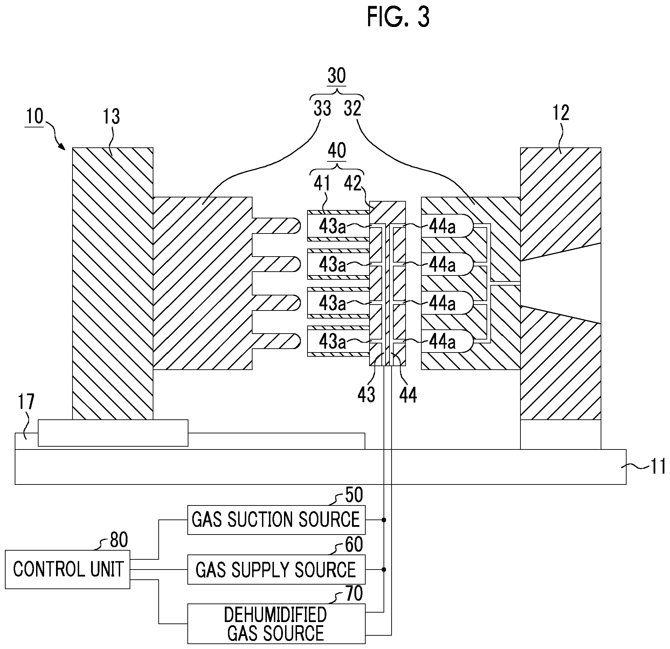

Fig. 1 is a view illustrating a state when mold closing is completed in an injection molding system according to an embodiment of the present invention. A take-out robot 40, a gas suction source 50, a gas supply source 60, and a dehumidified gas source 70, which are shown in Figs. 2 and 3, are not shown in Fig. 1. Fig. 2 is a view illustrating a state when mold opening is completed in the injection molding system according to the embodiment of the present invention. Fig. 3 is a view illustrating a state when molding is stopped in the injection molding system according to the embodiment of the present invention.

As shown in Figs. 1 to 3, the injection molding system includes, for example, an injection molding machine 10, a mold unit 30, a take-out robot 40, a gas suction source 50, a gas supply source 60, a dehumidified gas source 70, and a control unit 80.

The injection molding machine 10 includes a stationary platen 12 and a movable platen 13, and the mold unit 30 includes a stationary mold 32 and a movable mold 33.

The stationary platen 12 is fixed to a frame 11. The stationary mold 32 is attached on a surface of the stationary platen 12 facing the movable platen 13.

The movable platen 13 is movable along a guide (for instance, a guide rail) 17 laid on the frame 11, and movable in forward and rearward directions relative to the stationary platen 12. The movable mold 33 is attached on a surface of the movable platen 13 facing the stationary platen 12.

The injection molding machine 10 performs mold closing, mold clamping, and mold opening in the mold unit 30 by moving the movable platen 13 in the forward and rearward directions relative to the stationary platen 12. Cavity spaces 34 (see Fig. 1) are defined between the stationary mold 32 and the movable mold 33 in a mold-clamped state. The injection molding machine 10 forms molding products 35 (see Fig. 2) by filling the cavity spaces 34 with liquid molding materials and solidifying the filled molding materials. The molding product 35 may be detached from the stationary mold 32 by moving together with the movable mold 33 when the mold opening is performed.

As shown in Fig. 2, the take-out robot 40 is inserted between the stationary mold 32 and the movable mold 33 after the mold opening and receives the molding products from the movable mold 33. Subsequently, the take-out robot 40 is moved outward of the injection molding machine 10 and takes the molding products out of the mold unit 30. The take-out robot 40 includes molding product retention sections 41 and a gas passage formation section 42.

The molding product retention sections 41 retain the molding products 35. The molding product retention sections 41 may each have, for example, a cylindrical shape to retain the molding products 35 therein. A plurality of molding product retention sections 41 may be provided corresponding to a plurality of cavity spaces 34.

The gas passage formation section 42 forms a first gas passage 43 and a second gas passage 44. The first gas passage 43 is connected to the gas suction source 50, the gas supply source 60, and the dehumidified gas source 70 through a pipe. The second gas passage 44 is connected to the dehumidified gas source 70 through a pipe.

The gas suction source 50 absorbs gas from the first gas passage 43. The gas suction source 50 is configured of, for example, a vacuum pump. The gas absorbed by the gas suction source 50 may be, but not particularly limited to, for example air.

The gas supply source 60 supplies gas to the first gas passage 43. The gas supply source 60 is configured of, for example, an air compressor. In this case, air may be used as the gas supplied by the gas supply source 60. Furthermore, the gas supply source 60 may also be configured of a cylinder or the like. In addition, the gas supplied by the gas supply source 60 may be a variety of gases, for example, and may also be nitrogen gas.

The dehumidified gas source 70 supplies dehumidified gas to the first and second gas passages 43 and 44. The dehumidified gas source 70 is configured of, for example, an air drier, and dry air is used as the dehumidified gas. Furthermore, the dehumidified gas may be a variety of gases, for example, may also be nitrogen gas.

The control unit 80 includes a storage section such as a memory and a CPU. The control unit 80 controls the gas suction source 50, the gas supply source 60, and the dehumidified gas source 70 by executing control programs stored in the storage section in the CPU. For example, the control unit 80 functions as a switching unit which switches the gas supplied to each molding product retention section 41 from the first gas passage 43 by the gas passage formation section 42 between gas for retention release and dehumidified gas.

Next, an operation of the take-out robot 40 will be described.

The take-out robot 40 is inserted between the stationary mold 32 and the movable mold 33 after the mold opening when the molding is operated. Subsequently, when the control unit 80 operates the gas suction source 50, the gas passage formation section 42 allows gas to be absorbed from each molding product retention section 41 to the first gas passage 43. Consequently, each molding product retention section 41 adsorbs and retains the associated molding product 35.

In this state, when the take-out robot 40 is moved outward of the injection molding machine 10, the molding product 35 is taken out of the mold unit 30. Subsequently, when the control unit 80 stops the gas suction source 50 and operates the gas supply source 60, the gas passage formation section 42 allows gas to be supplied from the first gas passage 43 to each molding product retention section 41. Consequently, each molding product retention section 41 releases the retention of the associated molding product 35.

The take-out robot 40 may also be arranged between the stationary mold 32 and the movable mold 33 in a mold-opened state when the molding is stopped. In this state, when the control unit 80 operates the dehumidified gas source 70, the gas passage formation section 42 allows dehumidified gas, having a dew point temperature which is less than a temperature of the movable mold 33, to be blown from the first gas passage 43 to the movable mold 33, and at the same time allows dehumidified gas, having a dew point temperature which is less than a temperature of the stationary mold 32, to be blown from the second gas passage 44 to the stationary mold 32. Here, the dew point temperature of the dehumidified gas means a temperature at which a phenomenon of changing a portion of dehumidified gas from gaseous phase to liquid phase when the dehumidified gas is cooled begins.

The first gas passage 43 may have a plurality of branch passages 43a which is branched in the middle thereof and corresponds to the plurality of cavity spaces 34. Each branch passage 43a allows dehumidified gas to be blown toward a wall surface forming the cavity spaces 34 of the movable mold 33. The dehumidified gas is continuously or intermittently blown.

Similarly, the second gas passage 44 may have a plurality of branch passages 44a which is branched in the middle thereof and corresponds to the plurality of cavity spaces 34. Each branch passage 44a allows dehumidified gas to be blown toward a wall surface forming the cavity spaces 34 of the stationary mold 32. The dehumidified gas is continuously or intermittently blown.

The take-out robot 40 may also be arranged in a cover (not shown) of the injection molding machine 10 when the molding is stopped. Dehumidified gas may be collected in the cover, and be filled around the mold unit 30 arranged in the cover. In order to restrict infiltration of outdoor air, a positive pressure which is higher than the atmospheric pressure may also be considered in the cover.

According to the embodiment described above, the gas passage formation section 42 allows the dehumidified gas, having a dew point temperature which is less than the temperature of the movable mold 33, to be blown from the first gas passage 43 to the movable mold 33, when the molding is stopped. Since the dehumidified gas is directly blown toward the movable mold 33, condensation may be suppressed from occurring in the movable mold 33 when the molding is stopped. Consequently, molding products with high quality may be obtained when the molding is operated.

In addition, according to the embodiment, the gas passage formation section 42 allows the dehumidified gas, having a dew point temperature which is less than the temperature of the stationary mold 32, to be blown from the second gas passage 44 to the stationary mold 32, when the molding is stopped. Since the dehumidified gas is directly blown toward the stationary mold 32, condensation may be suppressed from occurring in the stationary mold 32 when the molding is stopped. Consequently, molding products with high quality may be obtained when the molding is operated.

In addition, according to the embodiment, the gas passage formation section 42 allows the gas to be absorbed from each molding product retention section 41 to the first gas passage 43 when the molding is operated, and thus each molding product retention section 41 adsorbs and retains the associated molding product 35. Accordingly, a gas passage for retention and a gas passage for dehumidification are configured in common. For this reason, when the molding is stopped, the dehumidified gas passes through the gas passage for retention and is blown from each molding product retention section 41 to the movable mold 33. Consequently, condensation may be suppressed from occurring in each molding product retention section 41. In addition, since the dehumidified gas is blown from each molding product retention section 41 to the movable mold 33, the dehumidified gas may be blown toward the wall surface forming the cavity spaces 34 of the movable mold 33. Consequently, condensation may be suppressed from occurring on the wall surface forming the cavity spaces 34, and thus quality of molding products may be further enhanced.

In addition, according to the embodiment, the gas passage formation section 42 allows the gas to be supplied from the first gas passage 43 to each molding product retention section 41 when the molding is operated, and thus each molding product retention section 41 releases the retention of the associated molding product 35. Accordingly, a gas passage for retention release and a gas passage for dehumidification are configured in common. For this reason, when the molding is stopped, the dehumidified gas passes through the gas passage for retention release and is blown from each molding product retention section 41 to the movable mold 33. Consequently, condensation may be suppressed from occurring in each molding product retention section 41. In addition, since the dehumidified gas is blown from each molding product retention section 41 to the movable mold 33, the dehumidified gas may be blown toward the wall surface forming the cavity spaces 34 of the movable mold 33. Consequently, condensation may be suppressed from occurring on the wall surface forming the cavity spaces 34, and thus quality of molding products may be further enhanced.

Furthermore, the gas passage for retention and the gas passage for retention release are configured in common in the embodiment, but both may also be formed independently. In this case, the gas passage for dehumidification and at least one of the gas passage for retention and the gas passage for retention release may also be configured in common.

Although the embodiment and the like of the take-out robot for injection molding machines have been described above, the present invention is not limited thereto and various changes and modifications may be made without departing from the concept and scope of the invention as defined in the following claims.

For example, although the take-out robot 40 of the above embodiment is arranged between the stationary mold 32 and the movable mold 33 in the mold-opened state when the molding is stopped, a position of the take-out robot 40 and a shape of the mold unit 30 are not particularly limited. For example, the take-out robot 40 may be arranged at a lateral side of the mold unit 30 in the mold-closed state when the molding is stopped, and the dehumidified gas may also be blown toward the mold unit 30 from the lateral side.

In addition, although the dehumidified gas has been blown to both of the stationary mold 32 and the movable mold 33 when the molding is stopped in the take-out robot 40 of the above embodiment, the dehumidified gas may also be blown to any one of both.

In addition, although the take-out robot 40 of the above embodiment has received the molding products 35 from the movable mold 33, the take-out robot 40 may also receive the molding products 35 from the stationary mold 32. In this case, when the molding opening is performed, the molding products 35 are attached to the stationary mold 32 and detached from the movable mold 33.

In addition, although the injection molding machine 10 of the above embodiment is a horizontal type injection molding machine in which a mold opening and closing direction is a horizontal direction, the injection molding machine 10 may also be a vertical type injection molding machine in which the mold opening and closing direction is a vertical direction.

## Claims

1. A take-out system for injection molding machines (10), comprising:
a) a take-out robot (40) for injection molding machines (10), which takes a molding product (35) obtained by filling a cavity space (34) defined in a mold with a molding material out of the mold, the take-out robot (40) comprising:
a gas passage formation section (42) that forms a gas passage (43, 44),
wherein, when molding is stopped, the gas passage formation section (42) allows dehumidified gas, having a dew point temperature which is less than a temperature of the mold, to be blown from the gas passage (43, 44) to the mold,
b) a dehumidified gas source (70) with which the take-out robot (40) is connected and that is adapted to supply
dehumidified gas to the gas passage (43, 44),
c) a control unit (80) that is adapted to control the dehumidified gas source (70) so as to blow dehumidified gas to the gas passage (43, 44).

2. The take-out system for injection molding machines (10) according to claim 1, the take-out robot (40) further comprising a molding product retention section (41) that retains the molding product (35),
wherein, when the molding is operated, the gas passage formation section (42) allows gas to be absorbed from the molding product retention section (41) to the gas passage, and thus the molding product retention section (41) adsorbs and retains the molding product (35).

3. The take-out system for injection molding machines (10) according to claim 1 or 2, the take-out robot (40) further comprising a molding product retention section (41) that retains the molding product (35),
wherein, when the molding is operated, the gas passage formation section (42) allows gas to be supplied from the gas passage to the molding product retention section (41), and thus the molding product retention section (41) releases retention of the molding product (35).

4. The take-out system for injection molding machines (10) according to claim 3, further comprising a switching unit that switches the gas supplied to the molding product retention section (41) from the gas passage by the gas passage formation section (42) between gas for retention release and the dehumidified gas.

5. An injection molding system comprising the take-out system according to any of claims 1 to 4.

## Patentansprüche

1. Entnahmesystem für Spritzgießmaschinen, umfassend:
a) einen Entnahmeroboter (40) für Spritzgießmaschinen (10), der ein durch Füllen eines in einer Form definierten Formhohlraums (34) mit einem Gießwerkstoff erhaltenes Spritzgusserzeugnis (35) aus der Form, wobei der Entnahmeroboter umfasst:
einen Gaskanal-Bildungsabschnitt (42), der einen Gaskanal (43, 44) bildet,
wobei der Gaskanal-Bildungsabschnitt (42) beim Beenden des Spritzgießens entfeuchtetem Gas, das eine Taupunkttemperatur aufweist, die niedriger ist als die Formtemperatur, ermöglicht, aus dem Gaskanal (43, 44) in die Form geblasen zu werden,
b) eine Quelle (70) für entfeuchtetes Gas, mit welcher der Entnahmeroboter (40) verbunden ist und die so ausgelegt ist, dass sie dem Gaskanal (43, 44) entfeuchtetes Gas zuführt,
c) eine Steuerungseinheit (80), die so ausgelegt ist, dass sie die Quelle (70) für entfeuchtetes Gas so steuert, dass sie entfeuchtetes Gas in den Gaskanal (43, 44) bläst.

2. Entnahmesystem für Spritzgießmaschinen (10) nach Anspruch 1, wobei der Entnahmeroboter (40) weiter einen Halteabschnitt (41) für Spritzgusserzeugnisse umfasst, der das Spritzgusserzeugnis (35) hält,
wobei der Gaskanal-Bildungsabschnitt (42) während des Durchführens des Spritzgießens es ermöglicht, dass Gas von dem Halteabschnitt (41) für Spritzgusserzeugnisse in den Gaskanal absorbiert wird und somit der Halteabschnitt (41) für Spritzgusserzeugnisse das Spritzgusserzeugnis (35) an sich bindet und es hält.

3. Entnahmesystem für Spritzgießmaschinen (10) nach Anspruch 1 oder 2, wobei der Entnahmeroboter (40) weiter einen Halteabschnitt (41) für Spritzgusserzeugnisse umfasst, der das Spritzgusserzeugnis (35) hält,
wobei der Gaskanal-Bildungsabschnitt (42) während des Durchführens des Spritzgießens es ermöglicht, dass Gas von dem Gaskanal dem Halteabschnitt (41) für Spritzgusserzeugnisse zugeführt wird und somit der Halteabschnitt (41) für Spritzgusserzeugnisse das Halten des Spritzgusserzeugnisses (35) löst.

4. Entnahmesystem für Spritzgießmaschinen (10) nach Anspruch 3, weiter umfassend eine Schalteinheit, die das Gas, das dem Halteabschnitt (41) für Spritzgusserzeugnisse von dem Gaskanal-Bildungsabschnitt (42) zugeführt wird, zwischen Gas zum Lösen des Haltens und dem entfeuchteten Gas umschaltet.

5. Spritzgießsystem, welches das Entnahmesystem nach einem der Ansprüche 1 bis 4 umfasst.

## Revendications

1. Système de sortie destiné à des machines de moulage par injection (10), comprenant :
a) un robot de sortie (40) destiné à des machines de moulage par injection (10), qui prend un produit de moulage (35) obtenu en remplissant un espace de cavité (34) défini dans un moule avec un matériau de moulage en-dehors du moule, le robot de sortie (40) comprenant :
une section de formation de passage de gaz (42) qui forme un passage de gaz (43, 44),
dans lequel, lorsque le moulage est arrêté, la section de formation de passage de gaz (42) permet à un gaz déshumidifié, qui présente un point de rosée qui est inférieur à une température du moule, d'être soufflé entre le passage de gaz (43, 44) et le moule,
b) une source de gaz déshumidifié (70) à laquelle le robot de sortie (40) est relié, et qui est adaptée pour fournir un gaz déshumidifié au passage de gaz (43, 44),
c) une unité de commande (80) qui est adaptée pour contrôler la source de gaz déshumidifié (70) de façon à souffler le gaz déshumidifié vers le passage de gaz (43, 44).

2. Système de sortie destiné à des machines de moulage par injection (10) selon la revendication 1, le robot de sortie (40) comprenant en outre une section de retenue de produit de moulage (41) qui retient le produit de moulage (35),
dans lequel, lorsque le moulage est déclenché, la section de formation de passage de gaz (42) permet au gaz d'être absorbé de la section de retenue de produit de moulage (41) vers le passage de gaz, et, ainsi, la section de retenue de produit de moulage (41) adsorbe et retient le produit de moulage (35).

3. Système de sortie destiné à des machines de moulage par injection (10) selon la revendication 1 ou 2, le robot de sortie (40) comprenant en outre une section de retenue de produit de moulage (41) qui retient le produit de moulage (35),
dans lequel, lorsque le moulage est déclenché, la section de formation de passage de gaz (42) permet au gaz d'être fourni par le passage de gaz à la section de retenue de produit de moulage (41), et, ainsi, la section de retenue de produit de moulage (41) libère le produit de moulage (35).

4. Système de sortie destiné à des machines de moulage par injection (10) selon la revendication 3, comprenant en outre une unité de commutation qui fait passer le gaz fourni à la section de retenue de produit de moulage (41) depuis le passage de gaz, par la section de formation de passage de gaz (42), entre un gaz de libération et le gaz déshumidifié.

5. Système de moulage par injection comprenant le système de sortie selon l'une quelconque des revendications 1 à 4.
